(19)

Europäisches
Patentamt
European
Patent Office
Office européen
des brevets

(11) **EP 2 549 433 B1**

(12) **EUROPEAN PATENT SPECIFICATION**

(45) Date of publication and mention
of the grant of the patent:
**16.04.2014 Bulletin 2014/16**

(51) Int Cl.:
***G06T 7/00*** *(2006.01)*

(21) Application number: **11461527.1**

(22) Date of filing: **18.07.2011**

(54) **A method and a system for segmenting a 3D image comprising round objects**

Verfahren und System zur Segmentierung eines 3D-Bildes mit runden Objekten

Procédé et système de segmentation d'une image 3D comprenant des objets ronds

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.01.2013 Bulletin 2013/04**

(73) Proprietor: **Instytut Biologii Doswiadczalnej IM.M.
Nenckiego Pan
02-093 Warszawa (PL)**

(72) Inventors:
• **Ruszczycki, Blazej
02-093 Warszawa (PL)**
• **Wilczynski, Grzegorz
02-093 Warszawa (PL)**

(74) Representative: **Pawlowski, Adam
Eupatent.PL
ul. Zeligowskiego 3/5
90-752 Lodz (PL)**

(56) References cited:
**US-A1- 2004 101 184     US-A1- 2008 137 926
US-A1- 2008 240 526     US-A1- 2010 166 283**

• **TAMURA S ET AL: "Plan-Based Boundary
Extraction and 3-D Reconstruction for orthogonal
2-D Echocardiography", PATTERN
RECOGNITION, ELSEVIER, GB, vol. 20, no. 2, 1
January 1987 (1987-01-01), pages 155-162,
XP009018444, ISSN: 0031-3203, DOI:
10.1016/0031-3203(87)90049-5**

**Description**

The present invention relates to segmenting a 3D image.. Specifically, the aim of the present invention is to provide an efficient system and method for segmenting a 3D image comprising densely packed round objects that are difficult to or unable to be properly segmented by other systems and methods.

The preferred embodiment of the invention relates to analysis of a 3D microscopic image of densely packed cell nuclei. The invention shall make it possible to reconstruct nucleus surface and to separate adjacent nuclei in confocal microscopic images. Other embodiments of the invention include, not limited to, all other types of 3D images comprising round objects, such as Computed Tomography Scans, Magnetic Resonance Imaging, etc. The invention can be applied both to living and unanimated objects, including liquid and solid mixtures and dispersions.

Modern trends in post-genomic biomedicine evolve to the approach focusing on thorough morphological evaluation of cells, tissues and organs, combined with molecular biology. In various fields, ranging from basic cell biology to neuroscience and medicine, scientists investigate the architecture of the cell nucleus. The spatial positioning, and structural organization of the genome, and of mRNA processing-machinery could possibly have a strong influence on cell behavior and tremendous impact on understanding the bases of diseases, including cancer, inflammation and neurodegeneration.

In the studies of nuclear compartmentalization in tissue sections using molecular markers, e.g. antibodies, it is essential that the fluorescent signals are properly quantified in the 3D stacks of confocal images. A crucial prerequisite to any quantification is a 3D segmentation of the neuronal nuclei which are typically tightly packed within the cell layer. The straightforward approaches used in the currently available image-processing software, mostly based on variations of watershed algorithm, fail to perform a correct segmentation. Even though they accomplish satisfactory results when tested on artificially created images, their performance is insufficient while being applied in analyzing the real high-resolution images which usually bear a large amount of various artifacts. The manual or semi-automatic segmentation is too absorbing to be used practically.

A US patent application US2010/166283A1 presents a computer-implemented method for segmenting a round vessel in a 3D CTA image, wherein 2D slice planes are determined in the 3D image, which planes are arranged orthogonally to the previously determined central line of the vessel. In each slice image the central line defines a seed that is used to determine the 2D contour of the vessel by radial search. This is done for all slices along the central line. Finally, the determined 2D contours are combined into a 3D contour of the vessel .

A US patent application US2008/137926 presents another computer-implemeneted method for segmenting a round vessel. A contour of the object is fitted with a 3D mesh comprising splines in at least first and second directions. The splines provide a plurality of editable control points, and the splines in the first direction intersect with the splines in the second direction at intersection points.

The object of the invention is a method according to the appended claims.

The method and system according to the invention allow to identify objects in the interior of the nucleus and to study their morphology and spatial arrangement. The method can be used for fully automated 3D segmentation. A high level of robustness has been achieved against a variety of artifacts typically present in the confocal stacks. The algorithms presented are efficient for crowded and overlapping objects in 3D space, enabling to study quantitatively the architecture of the cell nucleus in tissues and organs using high-resolution confocal-microscopic approach. For example, the present invention can be used as an element of a multistep algorithm to evaluate signals of fluorescent in situ hybridization (FISH) for nuclear gene alleles.

The present invention is shown by means of exemplary embodiment on a drawing, on which:

Fig. 1 shows an exemplary 3D image,
Fig. 2 shows the general steps of the method according to the invention,
Figs. 3A-3C show the method for determining seed points for the 3D image,
Fig. 4A shows the steps of a method for filtering seed points within a slice image, such as shown in Fig. 4B,
Fig. 5A shows a cross section of the 3D image along an XZ plane and Fig. 5B shows a contour 511 of a 3D round object.
Figs. 6A-6E show the concept of determining an area of an object surrounding the starting seed point.
Figs. 7A-7B show the concept of determining an area of an object surrounding a neighboring seed point.
Fig. 8 shows equations of the modified moments.

The present invention is particularly suitable for segmenting images obtained by a confocal microscope. The images are characterized by increasing amount of noise and decreasing brightness towards the depth direction of the image, but the algorithm is efficient enough to cope with these problems. The invention can be, however, used as well with other types of 3D images comprising densely packed round objects. It can be also used to analyze other 3D images, such as CT scans.

The term "round object" as used throughout the specification is to be understood as an object having a shape similar to a circle or to a sphere. Therefore, term encompasses also shapes that are not perfect circles or spheres, such as shapes having a boundary defined by points located at a common distance from the central point of the object plus/minus a threshold tolerance, such as for example 20% of the common distance. The accepted threshold tolerance, i.e. the deviation from the perfect circle or sphere which is acceptable for the method to allow detection of the object depends on the parameters of the image that is analyzed - the better the image quality, as defined by e.g. the sharpness and contrast, the higher threshold tolerance is acceptable for the objects that can be segmented.

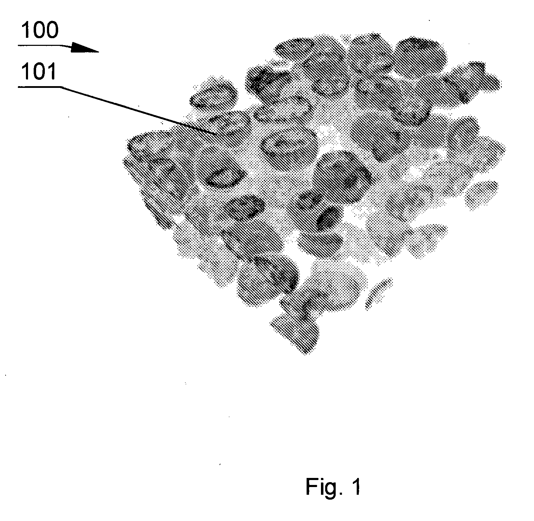

An exemplary 3D image 100 to be processed is shown in Fig. 1, which shows fluorescently labeled hippocampal neuronal nuclei 101 in the rat brain, randomly shadowed for illustrative purposes.

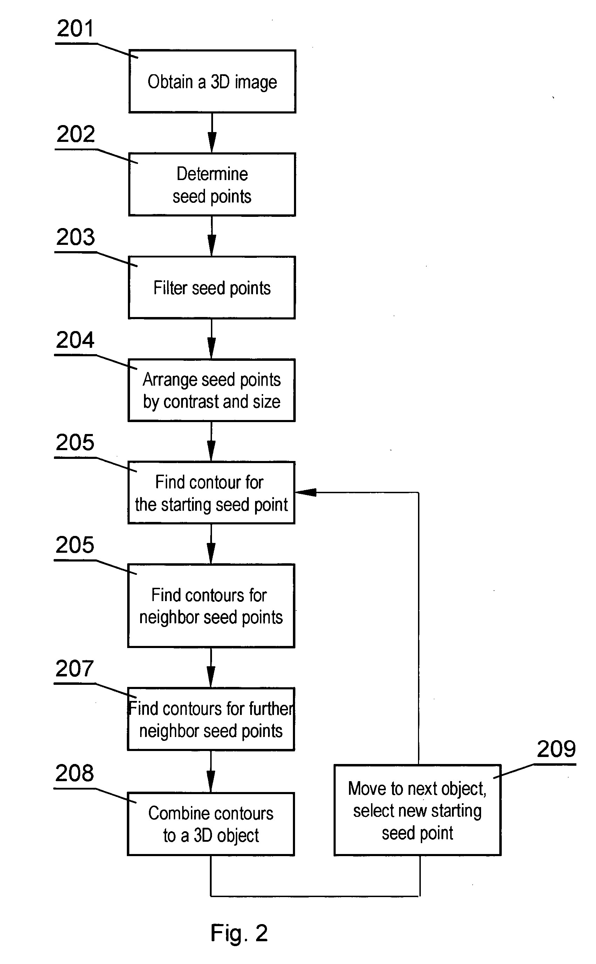

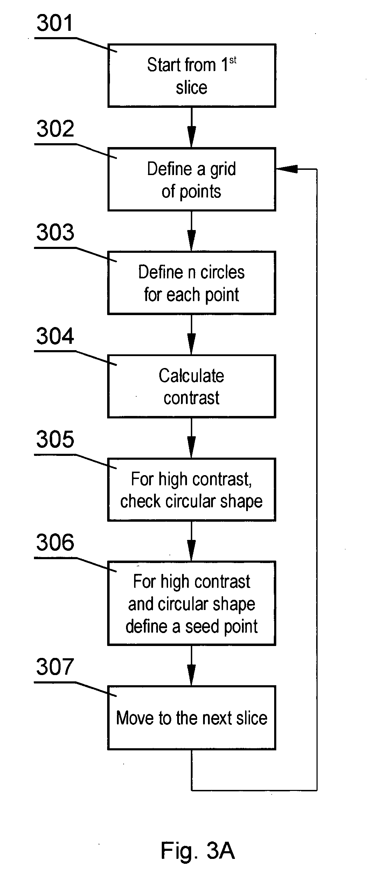

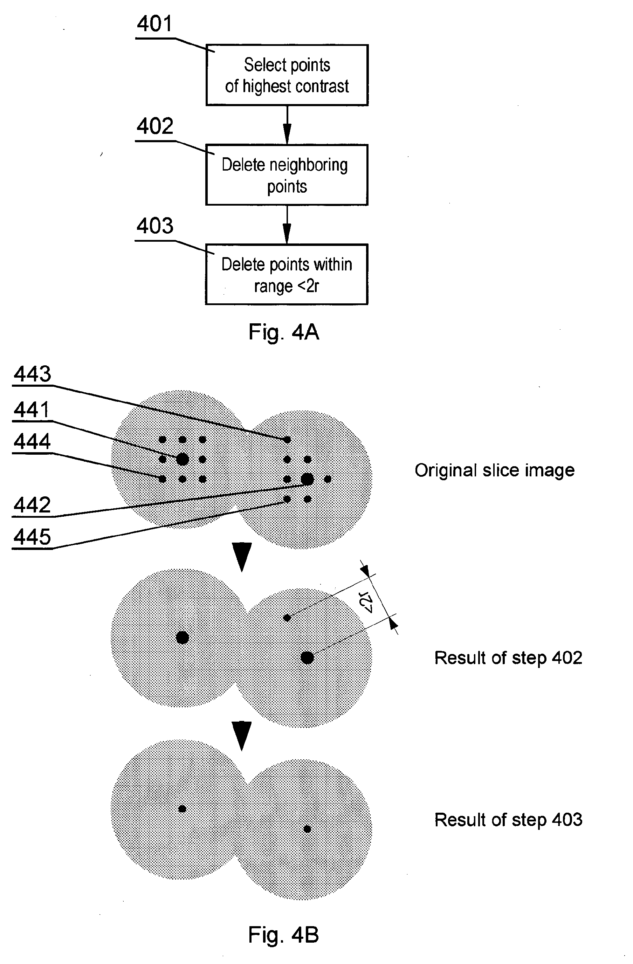

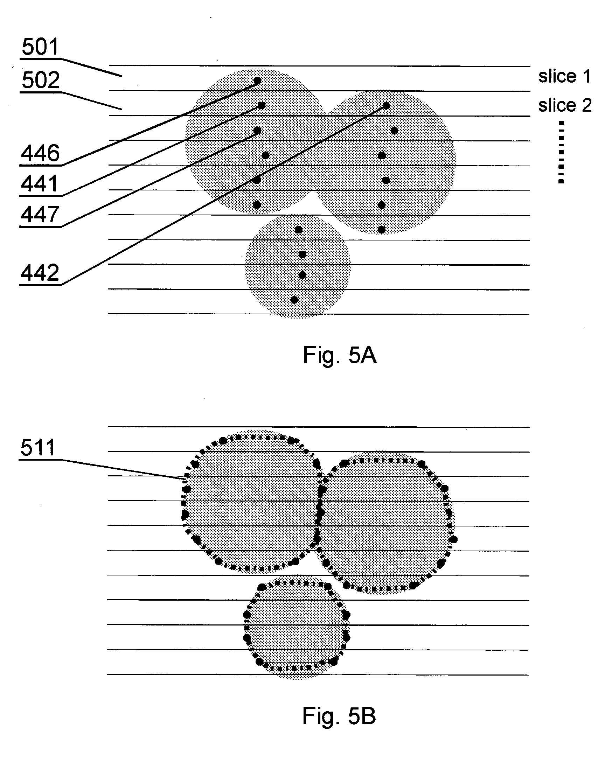

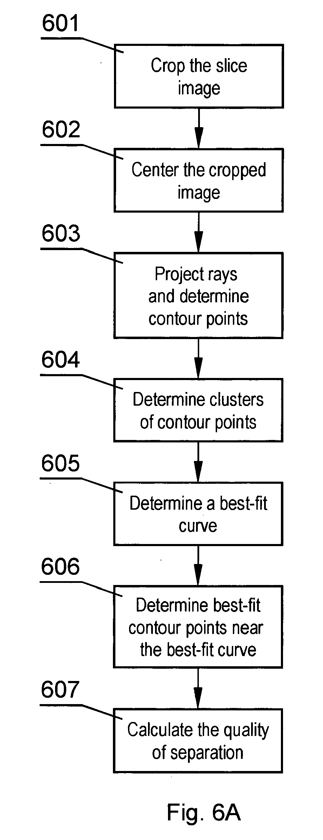

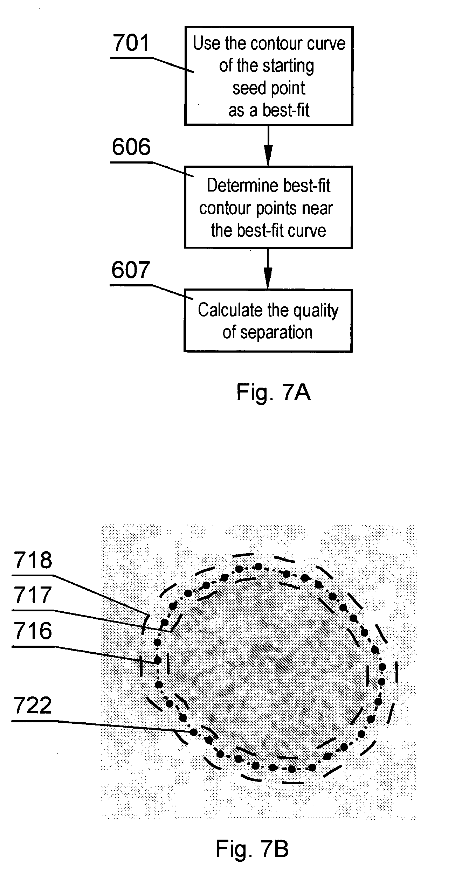

Fig. 2 shows the general steps of the method according to the invention. First, in step 201 a 3D image is obtained, for example an image from a confocal microscope. For example, the image may have a resolution of 1024x1024x161 pixels, corresponding to 76x76x32 microns (the resolution in the depth direction Z is lower than in the planar directions X, Y). The image is divided into 2D slice images. Next, in step 202 seed points for the image are determined, according to the method explained with reference to Figs. 3A-3C. Then in step 203 the seed points are filtered within each slice, as indicated with respect to Figs. 4A-4B. As a result, a set of slice images 501, 502 is obtained, each image comprising seed points at hypothetical centres of round areas at this image, as shown in example in Fig. 5A, showing a cross section of the 3D image along an XZ plane. In step 204 all seed points are arranged according to the contrast in the area that surrounds the seed point. Next, in step 205, for a seed point with the highest contrast and the sufficient brightness in the neighbourhood area the contour of the round area surrounding the seed point is determined in the plane of the slice to which the seed point belongs, according to the procedure shown in Figs. 6A-6E. That starting seed point 441 most probably represents a seed point in the interior of a 3D round object which is separate from other objects in the slice image plane of that seed point. As a result, a contour 619 of the round area surrounding the starting seed point 441 within its slice image plane is determined. Next, in step 206 there are selected neighboring seed points 446, 447 on other slice images that are in line with the starting seed point 441 within the segmentation plane, as shown in Fig. 5A. For that seed points 446, 447, contours are determined according to the procedure shown in Figs. 7A-7B. In step 207 the further neighboring points are processed by providing the previously processed neighboring seed points as starting seed points for further neighboring seed points on other slice images within the segmentation plane to determine contours of the further round areas, until all neighboring seed points are processed. Then, in step 208 the determined contours of the round areas associated with the first seed point and its neighboring points are combined into a contour 511 of a 3D round object, as shown in Fig. 5B. Then, other seed points may be analyzed according to steps 205-208 to determine contours of other 3D round objects within the image.

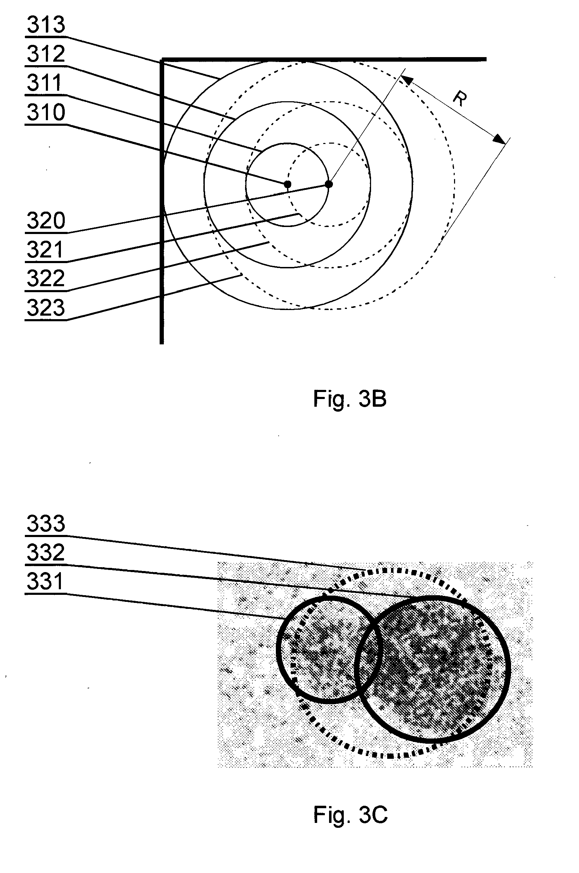

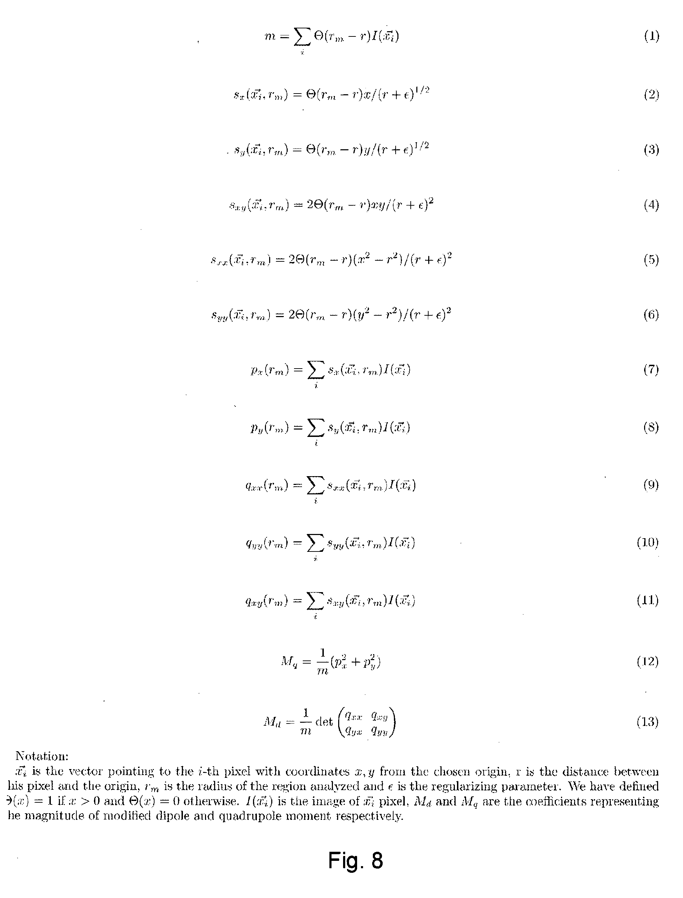

Fig. 3A shows the steps of the method for determining seed points for the 3D image. The method processes consecutive slices of the 3D image, starting for example from the top slice in step 301. First, in step 302 a grid of points is defined, for example a grid of points 310, 320 separated by 10 pixels in X and Y direction, as shown in Fig. 3B and 3C. Next, in step 303 for each point a plurality of circles, e.g. three (311, 312, 313), (321, 322, 323) are defined, the circles having their centers at the grid point and different diameters. The radius of the largest circle 313, 323 corresponds to 100% of the expected largest radius "R" of the object to be segmented within the 3D image, the radius of the medium circle 312, 322 corresponds to about 66% of the expected largest radius "R" and the radius of the smallest circle 311, 321 corresponds to about 33% of the expected largest radius "R". In step 304 for each circle a contrast is calculated by comparing the brightness of the inside of the circle to the brightness of the outside of the circle. The brightness of the inside of the circle can be calculated as an average brightness of all pixels within the circle. The brightness of the outside of the circle can be calculated as an average brightness of an area located outside the circle, for example a ring having a width of a number of pixels outside the circle. In case the contrast is high, it suggests that a circular area having a diameter of the particular circle is centered at the analyzed point. For each circle with high contrast detected, the shape of the area within the circle is checked in step 305 by analyzing the regularity of the image within the circle by calculating a magnitude of modified dipole moment and quadruple moment of the image in order to filter out non-circular areas. The equations of the modified moments are presented in Fig. 8, the necessity for modification is to dump the contribution of the points located the periphery of the analysed region and to regularize the expression in the center of the region. The central points of the circles for which a round shape has been detected within their boundaries are defined as seed points in step 306. The algorithm proceeds to the next 3D image slice then. As a result, for each slice a plurality of seeds points are defined. In practice, for each slice of a round object a plurality of seed points may be defined lying within that object, depending on the tolerance of steps 304, 305, as shown in Fig. 4B.

Fig. 3C shows an exemplary image, for which circles 331, 332, 333 would be indicated in step 304, as having a high boundary contrast, i.e. the average brightness within the circle higher than outside the circle. However, in step 305 only the circles 331, 332 would be indicated as having a round shape. Therefore, in step 306 only the center points of the circles 331, 332 would be defined as seed points.

Fig. 4A shows the steps of a method for filtering seed points within a slice image, such as shown in Fig. 4B. Fig. 4B shows a hypothetical image with two round areas therein, wherein a plurality of seed points 441-445 have been defined for each area, due to tolerances in steps 304, 305. The seed points are filtered in two steps. The size of the seed points has been adapted to indicate the contrast coefficient calculated for these points. First, the points of the highest contrast 441, 442 are selected in step 401 and next in step 402 their neighboring points, i.e. points within a distance of the grid size, are deleted. Next, in step 403 it is checked whether there are any points within a distance from each other which is shorter than twice the smallest expected radius "r" of a round object to be segmented and if so, the point that has smaller contrast is deleted.

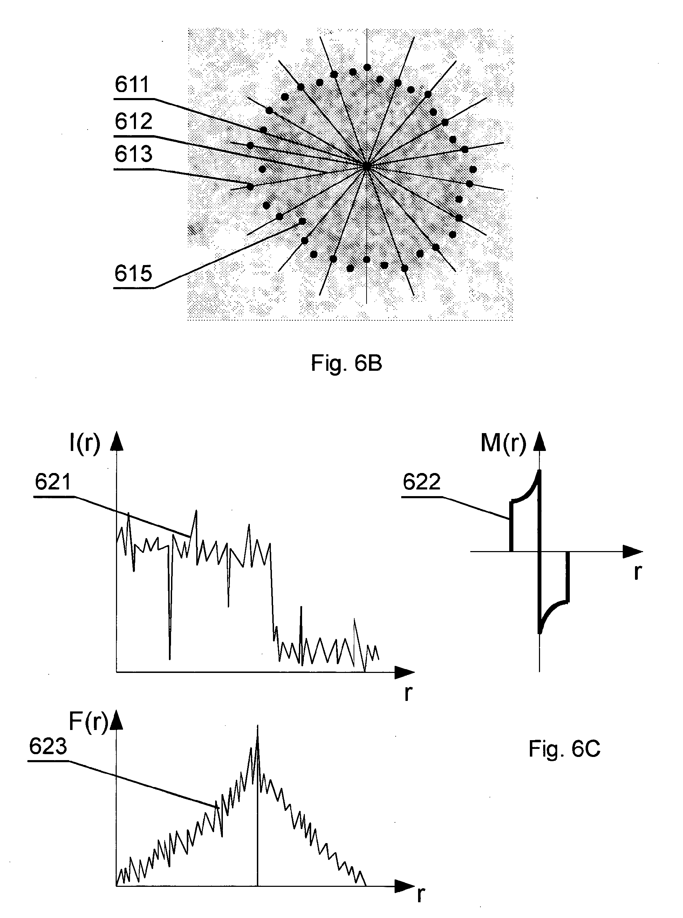

Figs. 6A-6E show the concept of determining an area of an object surrounding the starting seed point. First, in step 601 the slice image is cropped to a size slightly larger than the size of the largest round object expected. Next, in step 602 the cropped image can be centered to its mass centre 611, which can be slightly offset from the selected seed point 441. Then, in step 603 a plurality of rays 612 are projected from the centre of the image 611 towards its borders, as shown in Fig. 6B, and for each ray a plot 621 of its brightness is determined, as shown in Fig. 6C. Ideally, the plot 621 should have a constant high value within the round area and a constant low value outside the round area. However, for noisy images the plot can have a number of irregularities. Therefore, a mask 622 is used to filter the plot 621 and the following function is calculated:

$$F(r_0) = \int dr I(r) M(r - r_0)$$

wherein:

$r_0$ is the distance between the origin and the analyzed point
r represents other points neighboring the analyzed point
I(r) is the value of the plot 621
M(r-r_0) is the value of the mask 622

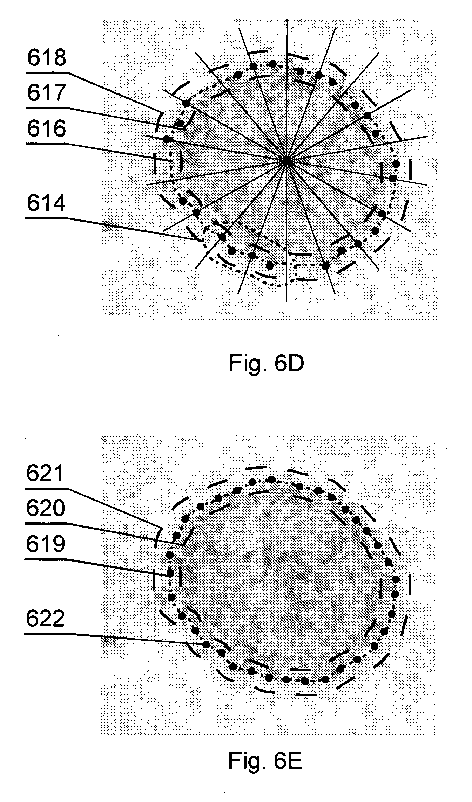

The resulting plot $F(r_0)$ is shown as 623.
The contour point along the ray is at the maximum value of the plot 623.
As a result of step 603, a plurality of contour points 613 are defined along the rays 612, which are however not aligned along a round contour.
In step 604, clusters of 614 points are determined, wherein a cluster encompasses a group of points such that each point in the group has a neighbor within a specified distance. The points 615 that are outside the clusters are removed, as shown in Fig. 6D. Then, a best-fit curve 616 which fits best along the clusters is determined in step 605.
In step 606, contour points are determined again along the rays 612 in a manner equivalent to step 603, but this time the analysis is narrowed to a fragment of the ray which is close to the best fit curve. i.e. a fragment between the curves 617, 618. Within that fragment, contour points 622 are determined again to fill the places missing after the points deleted in step 604 and to move the cluster points to a more appropriate position. The obtained set of points 622 and/or the contour curve 619 as shown in Fig. 6E is a best approximation of the contour of the round area surrounding the seed point 441.
In addition, the quality of the area segmentation can be measured in step 607 by calculating the contrast between the average brightness of an area outside the curve 619 joining the best matched contour points (e.g. an area between curves 619 and 621) and of an area inside the curve 619 (e.g. an area between curves 619 and 620). If the contrast is high, this suggests that the area is well separated and the seed point is a good starting seed point.
Figs. 7A-7B show the concept of determining an area of an object surrounding a neighboring seed point 446. The procedure is similar to that of Fig. 6A, but it starts in step 701 from a contour curve 619 defined for the starting seed point as the best fit curve 716, as shown in Fig. 7B. In step 702, contour points 722 are determined again along the rays in a manner equivalent to step 603, but this time the analysis is narrowed to a fragment of the ray which is close to the best fit curve. i.e. a fragment between the curves 717, 718. The obtained set of points 722 and/or the contour curve 719 as shown in Fig. 7B is a best approximation of the contour of the round area surrounding the neighboring seed point 446. In addition, the quality of the area segmentation can be measured in step 703 in a manner equivalent to step 607
An important advantage of the method presented is that the starting seed point is a point with high contrast and a well-defined round shape, i.e. a shape that does not touch other round objects. In that case, even if the round object touches another objects at its other slice image planes, the contours of the starting seed point can be a good estimation of contours of the neighboring slice planes. This allows precise segmentation of 3D round objects that are densely packed and touch each other.

**Claims**

1. A computer-implemented method for segmenting a 3D image comprising round objects, the method comprising the steps of:

- dividing the 3D image (100) into 2D slice images (501, 502)
- for each slice image (501, 502), determining seed points (441, 442) within round areas of the slice image having brightness different than the background of the image,
- processing the determined seed points (441, 442) by:

○ selecting a starting seed point (441),
○ for the starting seed point (441), determining a contour (619) of a round area surrounding the starting seed point (441) within its slice image plane,

○ selecting neighboring seed points (446, 447) on other slice images that are in line with the starting seed point (441) within the segmentation plane,

○ determining contours of the round areas surrounding the neighboring seed points (446, 447) within their slice image planes based on the contours (619, 716) of the round area surrounding the starting seed point or another neighboring seed point, until all neighboring seed points are processed,

○ combining the determined contours of the round areas associated with the first seed point (441) and its neighboring seed points (446, 447) into a contour of a 3D round object,

**characterized in that**

the seed points within a slice image are determined by comparing, for a plurality of circles (311, 312, 313) distributed on a grid of points, the circles having their centers at the grid point, the brightness of an area within the circle (311, 312, 313) and outside the circle(311, 312, 313) and determining a seed point for a centre of the circle in which the brightness of the area within the circle (311, 312, 313) is larger than of the area outside the circle(311, 312, 313) by a predetermined threshold.

2. The method according to claim 1, wherein for each grid point there is a plurality of circles, and the circles (311, 312, 313) have various sizes for each grid point.

3. The method according to claim 1, wherein the shape of the area surrounding the determined seed points is checked and the points for which the shape is not round are determined as not being seed points.

4. The method according to claim 1, wherein the determined seed points are filtered by removing points which are closer to other points by a predetermined distance.

5. The method according to claim 1, wherein the contour (619) of the round area surrounding the starting seed point (441) within its slice image plane is determined by analyzing distribution of image brightness along rays (612) projected from the seed point in different directions and determining contour points at places where the image brightness indicates a high contrast transition.

6. The method according to claim 5, wherein the distribution of image brightness along rays (612) is performed by multiplying the brightness at each point of the ray with a mask function (622).

7. The method according to claim 5, further comprising the steps of:

- grouping the contour points in clusters comprising contour points having at least one neighboring point within a predefined threshold and removing points not grouped in clusters,
- determining a best fit curve (616) between the contour points of the clusters,
- reprocessing the contour points by analyzing distribution of image brightness along the rays (612) projected from the seed point in different directions within a predefined range from a cross section of the rays (612) and the best fit curve (616) and determining new contour points at places where the image brightness indicates a high contrast transition.

8. The method according to claim 7, further comprising the step of measuring quality of area segmentation by calculating the contrast between the brightness of an area outside a curve (619) joining the new contour points with the brightness of an area inside the curve (619) joining the new contour points.

9. The method according to claim 1, wherein the contours of the round areas surrounding the neighboring seed points (446, 447) are determined by:

- obtaining a curve (619) joining the contour points of a starting or neighboring seed point,
- analyzing distribution of image brightness along rays (612) projected from the neighboring seed point (446, 447) in different directions within a predefined range from a cross section of the rays (612) and the curve (619) and determining contour points at places where the image brightness indicates a high contrast transition.

10. A computer-implemented system comprising means configured to perform the steps of the method according to claims 1-9.

11. A computer program comprising program code means for performing all the steps of the computer-implemented method according to any of claims 1-9 when said program is run on a computer.

**Patentansprüche**

1. Ein computerimplementiertes Verfahren zur Segmentierung eines 3D-Bildes, umfassend runde Objekte, wobei das Verfahren die folgenden Schritte umfasst:

- Unterteilung des 3D-Bildes (100) in 2D-Schichtbilder (501, 502)
- für jedes Schichtbild (501, 502) Festlegung von Saatpunkten (441, 442) innerhalb runder Bereiche des Schichtbildes, deren Helligkeit sich vom Hintergrund des Bildes unterscheidet,
- Bearbeitung der festgelegten Saatpunkte (441, 442) durch:

  o Auswählen eines Startsaatpunktes (441),
  o für den Startsaatpunkt (441) Festlegen einer Kontur (619) eines runden Bereiches, der den Startsaatpunkt (441) innerhalb seiner Schichtbildebene umgibt,
  o Auswählen von benachbarten Saatpunkten (446, 447) auf anderen Schichtbildern, die in einer Linie mit dem Startsaatpunkt (441) innerhalb der Segmentierungsebene liegen,
  o Festlegen der Konturen der runden Bereiche, die die benachbarten Saatpunkte (446, 447) innerhalb der Schichtbildebenen umgeben, basierend auf den Konturen (619, 716) des runden Bereichs, der den Startsaatpunkt oder einen anderen benachbarten Saatpunkt umgibt, bis alle benachbarten Saatpunkte bearbeitet sind,
  o Kombinieren der festgelegten Konturen der runden Bereiche im Zusammenhang mit dem ersten Saatpunkt (441) und seinen benachbarten Saatpunkten (446, 447) in eine Kontur eines runden 3D-Objekts, **dadurch gekennzeichnet, dass** die Saatpunkte innerhalb eines Schichtbildes für eine Vielzahl von Kreisen (311, 312, 313), die auf einem Punkteraster verteilt sind - wobei die Kreise ihre Mitten an den Rasterpunkten haben - festgelegt werden durch Vergleichen der Helligkeit eines Bereichs innerhalb des Kreises (311, 312, 313) und außerhalb des Kreises (311, 312, 313), sowie Bestimmen eines Saatpunkts für eine Mitte des Kreises, in dem die Helligkeit des Bereichs innerhalb des Kreises (311, 312, 313) um einen vorher festgelegten Schwellenwert größer ist als jene des Bereichs außerhalb des Kreises (311, 312, 313).

2. Das Verfahren gemäß Anspruch 1, worin es für jeden Rasterpunkt eine Vielzahl von Kreisen gibt und die Kreise (311, 312, 313) verschiedene Größen für jeden Rasterpunkt aufweisen.

3. Das Verfahren gemäß Anspruch 1, worin die Form des Bereiches, der die festgelegten Saatpunkte umgibt, überprüft wird und festgelegt wird, dass die Punkte, für die die Form nicht rund ist, keine Saatpunkte sind.

4. Das Verfahren gemäß Anspruch 1, worin die festgelegten Saatpunkte durch das Entfernen von Punkten, die anderen Punkten um einen vorher festgelegten Abstand näher sind, gefiltert werden.

5. Das Verfahren gemäß Anspruch 1, worin die Kontur (619) des runden Bereiches, der den Startsaatpunkt (441) innerhalb seiner Schichtbildebene umgibt, ermittelt wird durch die Analyse der Verteilung der Bildhelligkeit entlang der Strahlen (612), die vom Saatpunkt in verschiedene Richtungen projiziert werden, sowie durch Bestimmung der Konturpunkte an Stellen, wo die Bildhelligkeit einen hohen Kontrastübergang anzeigt.

6. Das Verfahren gemäß Anspruch 5, worin die Verteilung der Bildhelligkeit entlang von Strahlen (612) durch Multiplizieren der Helligkeit an jedem Punkt des Strahls mit einer Maskenfunktion (622) durchgeführt wird.

7. Das Verfahren gemäß Anspruch 5, das überdies folgende Schritte umfasst:

  - Gruppieren der Konturpunkte in Clustern, die Konturpunkte umfassen, welche mindestens einen benachbarten Punkt innerhalb eines vordefinierten Grenzbereichs aufweisen, sowie Entfernen von Punkten, die nicht in Clustern gruppiert sind,
  - Bestimmen einer Ausgleichskurve (616) zwischen den Konturpunkten der Cluster,
  - Neubearbeiten der Konturpunkte durch die Analyse der Verteilung der Bildhelligkeit entlang der Strahlen (612), die vom Saatpunkt in verschiedene Richtungen innerhalb eines vordefinierten Bereiches von einem Querschnitt der Strahlen (612) projiziert werden, und Festlegen der neuen Konturpunkte an Stellen, an denen die Bildhelligkeit einen hohen Kontrastübergang anzeigt.

8. Das Verfahren gemäß Anspruch 7, das überdies den Schritt des Messens der Qualität der Bereichssegmentation durch die Berechnung des Kontrasts zwischen der Helligkeit eines Bereichs außerhalb einer Kurve (619), die die neuen Konturpunkte verbindet, und der Helligkeit eines Bereichs innerhalb der Kurve (619), die die neuen Konturpunkte verbindet, umfasst.

9. Das Verfahren gemäß Anspruch 1, worin die Konturen der runden Bereiche, welche die benachbarten Saatpunkte (446, 447) umgeben, folgendermaßen bestimmt werden:

- Erhalten einer Kurve (619), die die Konturpunkte eines Startsaatpunkts oder benachbarten Saatpunkts verbindet,
- Analysieren der Verteilung der Bildhelligkeit entlang der Strahlen (612), die vom benachbarten Saatpunkt (446, 447) in verschiedene Richtungen innerhalb eines vordefinierten Bereichs von einem Querschnitt der Strahlen (612) und der Kurve (619) projiziert werden, und Bestimmen der Konturpunkte an Stellen, wo die Bildhelligkeit einen hohen Kontrastübergang anzeigt.

10. Ein computerimplementiertes System, umfassend Mittel, die konfiguriert sind, um die Schritte des Verfahrens gemäß den Ansprüchen 1-9 durchzuführen.

11. Ein Computerprogramm umfassend Programmcodemittel zur Durchführung aller Schritte des computerimplementierten Verfahrens gemäß einem der Ansprüche 1-9, wenn das genannte Programm auf einem Computer läuft.


**Revendications**

1. Un procédé mis en oeuvre par ordinateur de segmentation d'une image 3D contenant des objets ronds, le procédé comprenant les opérations suivantes :

- la division de l'image 3D (100) en images en tranches 2D (501, 502),
- pour chaque image en tranches (501, 502), la détermination de points-graines (441, 442) à l'intérieur de zones rondes de l'image en tranches possédant une luminosité différente de celle de l'arrière-plan de l'image,
- le traitement des points-graines déterminés (441, 442) par :

○ la sélection d'un point-graine de départ (441),
○ pour le point-graine de départ (441), la détermination d'un contour (619) d'une zone ronde entourant le point-graine de départ (441) à l'intérieur de son plan d'image en tranches,
○ la sélection de points-graines voisins (446, 447) sur d'autres images en tranches qui sont alignées avec le point-graine de départ (441) à l'intérieur du plan de segmentation,
○ la détermination de contours des zones rondes entourant les points-graines voisins (446, 447) à l'intérieur de leurs plans d'image en tranches en fonction des contours (619, 716) de la zone ronde entourant le point-graine de départ ou un autre point-graine voisin jusqu'à ce que tous les points-graines voisins aient été traités,
○ la combinaison des contours déterminés des zones rondes associées au premier point-graine (441) et ses points-graines voisins (446, 447) en un contour d'un objet rond 3D,

**caractérisé en ce que**
les points-graines à l'intérieur d'une image en tranches sont déterminés par la comparaison, pour une pluralité de cercles (311, 312, 313) répartis sur une grille de points, les cercles ayant leurs centres au niveau de points de grille, de la luminosité d'une zone à l'intérieur du cercle (311, 312, 313) et à l'extérieur du cercle (311, 312, 313) et la détermination d'un point-graine pour un centre du cercle dans lequel la luminosité de la zone à l'intérieur du cercle (311, 312, 313) est supérieure à celle de la zone à l'extérieur du cercle(311, 312, 313) d'un seuil prédéterminé.

2. Le procédé selon la Revendication 1, où, pour chaque point de grille, il existe une pluralité de cercles, et les cercles (311, 312, 313) possèdent diverses tailles pour chaque point de grille.

3. Le procédé selon la Revendication 1, où la forme de la zone entourant les points-graines déterminés est vérifiée et les points pour lesquels la forme n'est pas ronde sont considérés ne pas être des points-graines.

4. Le procédé selon la Revendication 1, où les points-graines déterminés sont filtrés par la suppression des points qui sont plus près d'autres points d'une distance prédéterminée.

5. Le procédé selon la Revendication 1, où le contour (619) de la zone ronde entourant le point-graine de départ (441) à l'intérieur de son plan d'image en tranches est déterminé par l'analyse d'une distribution de luminosité d'image le long de rayons (612) projetés à partir du point-graine dans différentes directions et pa la détermination de points de contour en des endroits où la luminosité d'image indique une transition à contraste élevé.

6. Le procédé selon la Revendication 5, où la distribution de luminosité d'image le long de rayons (612) est exécutée par la multiplication de la luminosité à chaque point du rayon avec un masque de fonction (622).

**7.** Le procédé selon la Revendication 5, comprenant en outre les opérations suivantes :

- le groupement des points de contour en grappes comprenant des points de contour possédant au moins un point voisin à l'intérieur d'un seuil prédéfini et la suppression des points non groupés en grappes,
- la détermination d'une courbe d'ajustement optimal (616) entre les points de contour des grappes,
- le retraitement des points de contour par l'analyse d'une distribution de luminosité d'image le long des rayons (612) projetés à partir du point-graine dans différentes directions à l'intérieur d'une plage prédéfinie à partir d'une section transversale des rayons (612) et de la courbe d'ajustement optimal (616) et par la détermination de nouveaux points de contour en des endroits où la luminosité d'image indique une transition à contraste élevé.

**8.** Le procédé selon la Revendication 7, comprenant en outre l'opération de mesure de la qualité d'une segmentation de zone par le calcul du contraste entre la luminosité d'une zone à l'extérieur d'une courbe (619) joignant les nouveaux points de contour avec la luminosité d'une zone à l'intérieur de la courbe (619) joignant les nouveaux points de contour.

**9.** Le procédé selon la Revendication 1, où les contours des zones rondes entourant les points-graines voisins (446, 447) sont déterminés par :

- l'obtention d'une courbe (619) joignant les points de contour d'un point-graine de départ ou d'un point-graine voisin,
- l'analyse d'une distribution de luminosité d'image le long de rayons (612) projetés à partir du point-graine voisin (446, 447) dans différentes directions à l'intérieur d'une plage prédéfinie à partir d'une section transversale des rayons (612) et de la courbe (619) et la détermination de points de contour en des endroits où la luminosité d'image indique une transition à contraste élevé.

**10.** Un système mis en oeuvre par ordinateur comprenant un moyen configuré de façon à exécuter les étapes du procédé selon les Revendications 1 à 9.

**11.** Un programme informatique contenant un moyen de code de programme pour l'exécution de toutes les étapes du procédé mis en oeuvre par ordinateur selon l'une quelconque des Revendications 1 à 9 lorsque ledit programme est exécuté sur un ordinateur.

100

101

Fig. 1

201

Obtain a 3D image

202

Determine
seed points

203

Filter seed points

204

Arrange seed points
by contrast and size

205

Find contour for
the starting seed point

205

Find contours for
neighbor seed points

207

Find contours for further
neighbor seed points

208

Combine contours
to a 3D object

209

Move to next object,
select new starting
seed point

Fig. 2

301
Start from 1st slice

302
Define a grid of points

303
Define n circles for each point

304
Calculate contrast

305
For high contrast, check circular shape

306
For high contrast and circular shape define a seed point

307
Move to the next slice

Fig. 3A

313
312
311
310

320
321
322
323

R

Fig. 3B

333
332
331

Fig. 3C

401 Select points of highest contrast

402 Delete neighboring points

403 Delete points within range <2r

Fig. 4A

443
441
444

442
445

Original slice image

Result of step 402

Result of step 403

Fig. 4B

501

502

446

441

447

442

slice 1

slice 2

Fig. 5A

511

Fig. 5B

601 → Crop the slice image

602 → Center the cropped image

603 → Project rays and determine contour points

604 → Determine clusters of contour points

605 → Determine a best-fit curve

606 → Determine best-fit contour points near the best-fit curve

607 → Calculate the quality of separation

Fig. 6A

Fig. 6B

Fig. 6C

618
617
616

614

Fig. 6D

621
620
619

622

Fig. 6E

701 — Use the contour curve of the starting seed point as a best-fit

606 — Determine best-fit contour points near the best-fit curve

607 — Calculate the quality of separation

Fig. 7A

718
717
716

722

Fig. 7B

$$m = \sum_i \Theta(r_m - r)I(\vec{x_i}) \tag{1}$$

$$s_x(\vec{x_i}, r_m) = \Theta(r_m - r)x/(r + \epsilon)^{1/2} \tag{2}$$

$$s_y(\vec{x_i}, r_m) = \Theta(r_m - r)y/(r + \epsilon)^{1/2} \tag{3}$$

$$s_{xy}(\vec{x_i}, r_m) = 2\Theta(r_m - r)xy/(r + \epsilon)^2 \tag{4}$$

$$s_{xx}(\vec{x_i}, r_m) = 2\Theta(r_m - r)(x^2 - r^2)/(r + \epsilon)^2 \tag{5}$$

$$s_{yy}(\vec{x_i}, r_m) = 2\Theta(r_m - r)(y^2 - r^2)/(r + \epsilon)^2 \tag{6}$$

$$p_x(r_m) = \sum_i s_x(\vec{x_i}, r_m)I(\vec{x_i}) \tag{7}$$

$$p_y(r_m) = \sum_i s_y(\vec{x_i}, r_m)I(\vec{x_i}) \tag{8}$$

$$q_{xx}(r_m) = \sum_i s_{xx}(\vec{x_i}, r_m)I(\vec{x_i}) \tag{9}$$

$$q_{yy}(r_m) = \sum_i s_{yy}(\vec{x_i}, r_m)I(\vec{x_i}) \tag{10}$$

$$q_{xy}(r_m) = \sum_i s_{xy}(\vec{x_i}, r_m)I(\vec{x_i}) \tag{11}$$

$$M_q = \frac{1}{m}(p_x^2 + p_y^2) \tag{12}$$

$$M_d = \frac{1}{m} \det \begin{pmatrix} q_{xx} & q_{xy} \\ q_{yx} & q_{yy} \end{pmatrix} \tag{13}$$

Notation:

$\vec{x_i}$ is the vector pointing to the $i$-th pixel with coordinates $x, y$ from the chosen origin, r is the distance between his pixel and the origin, $r_m$ is the radius of the region analyzed and $\epsilon$ is the regularizing parameter. We have defined $\Theta(x) = 1$ if $x > 0$ and $\Theta(x) = 0$ otherwise. $I(\vec{x_i})$ is the image of $\vec{x_i}$ pixel, $M_d$ and $M_q$ are the coefficients representing he magnitude of modified dipole and quadrupole moment respectively.

# Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010166283 A1

- US 2008137926 A